# EUROPEAN PATENT SPECIFICATION

(11) **EP 0 541 318 B1**
(45) Date of publication and mention of the grant of the patent: **15.10.1997**
(21) Application number: 92310022.6
(22) Date of filing: 02.11.1992
(51) Int. Cl.: C23F 11/08

(54) **Cooling water treatment composition and method**
Zusammensetzung und Verfahren zur Behandlung von Kühlwasser
Composition et méthode de traitement des eaux de refroidissement

(30) Priority: 06.11.1991 CA 2055061
(43) Date of publication of application: 12.05.1993
(73) Proprietor: Diversey Corporation, Mississauga, Ontario L4Z 3S9 (CA)
(72) Inventor: Coughlin, Michael F., Cobourg, Ontario K9A 4S8 (CA)
(74) Representative: Froud, Clive

(56) References cited:
- EP-A- 0 451 434
- GB-A- 2 200 846
- US-A- 4 246 030
- US-A- 4 895 663
- US-A- 5 023 011

## Description

This invention relates to a cooling water treatment composition.

Cooling water, e.g. cooling tower water, is treated with compositions for preventing corrosion, scale deposition and the growth of microorganisms. Multi-functional cooling water treatment compositions are by no means new. An example of such a composition, which acts as a combination corrosion inhibitor, deposit control agent and biocide, is described in United States Patent No. 4,719,083, issued to Gary L. Baker et al on January 12, 1988 and in the references of record in such patent. As mentioned in the patent, a common ingredient for water treatment compositions is organophosphorus compounds which function as dispersants, antiscaling agents and corrosion inhibitors. Other corrosion inhibitors include alkali and alkaline earth metal molybdate salts and aromatic azoles, e.g. benzotriazole and tolytriazole. Biocides or biostats, such ClO₂, cholorine and quaternary ammonium compounds for inhibiting the growth of algae, fungi and bacteria are also included in the composition. The preferred quaternary ammonium compounds proposed in the Baker et al patent are poly[oxyalkylene(dialkylimminio)alkylene(dialkylimminio] salts as WSCP (a trade mark of Buckman Laboratories), which is poly[oxyethelene(dimethylimminio)-ethylene(dimethylimminio)ethylene dichloride].

A problem with formulations of the above described is that of successfully blending the three primary active ingredients, namely corrosion inhibitors, deposit control agents and biocides in one formulation. For example, WSCP is a cationic biocide. As such, the complex is inherently reactive with known deposit control agents, which are usually anionic. Charge neutralization of cationic biocides and anionic dispersants results and consequently the activity level of both ingredients is severely compromised.

Reference may also be made to US-A-5,023,011, which relates to a cooling water treatment system, and to GB-A-2,200,846, which concerns biocide protectors.

The object of the present invention is to solve the above-mentioned problem by providing a relatively stable water treatment composition with a successful blend of a corrosion inhibitor, deposit control agent and biocide.

The present invention provides a cooling water treatment composition characterised in that, upon addition to cooling water, it provides, in combination, corrosion inhibition, deposition control and biocidal properties, and it comprises the following components:
(a) from 0.1 to 1.0%, by weight, based on the total weight, of an azole copper corrosion inhibitor;
(b) a steel corrosion inhibitor selected from:
   (i) from 0.6 to 6.0%, by weight, based on the total weight, of a phosphono-carboxylic acid;
   (ii) from 1.6 to 16.5%, by weight, based on the total weight, of a water-soluble molybdate salt;
   (iii) sufficient water-soluble zinc salt to give a zinc concentration of from 0.1 to 1.0%, by weight, based on weight; and
   (iv) mixtures of the said components b(i), b(ii) and b(iii);
(c) from 0.6 to 6.0%, by weight, based on the total weight, of a sulfonated acrylate copolymer deposit control agent;
(d) from 0.15 to 1.6%, by weight, based on the total weight, of an aminocarboxylic acid deposit control agent;
(e) from 0.1 to 1.0%, by weight, based on the total weight, of isothiazolone biocide;
(f) from 0.5 to 5.0%, by weight, based on the total weight, of an organophosphate deposit control agent selected from hydroxyethelene diphosphonic acid, aminotri-(methylene phosphonic acid), phosphonobutane-1,2,3-tricarboxylic acid and mixtures thereof; and
(g) the balance water;
the said components providing the said combination of properties where the composition is inherently depressed to a pH of about 1.5 by the said steel corrosion inhibitor and the said organophosphate deposit control agent, the depressed pH inhibiting the chemical reaction of the said corrosion inhibitors and deposit control agents with the said isothiazolone biocide thereby rendering the composition stable.

A composition in accordance with the present invention typically includes the ingredients listed in Table 1, the balance of the composition being water. The preferred percentage ranges listed below are based on the total weight of the composition.

**TABLE 1**

| Trade Name | Percentage* | Functionality | Chemical Name of Active Ingredient |
|---|---|---|---|
| Cobratec TT-100® | 0.1 - 1.0 | copper corrosion inhibitor | tolyltriazole |
| | | | |
| Belcor 5750® | 0.6 - 6.0 | steel corrosion inhibitor | phosphonocarboxylic acid |
| | | | |
| Acumer 2000® | 0.6 - 6.0 | deposit control agent | sulfonated acrylate copolymer |
| | | | |
| Versene® | 0.15 - 1.6 | deposit control agent | ethylene diamine tetraacetic acid (EDTA) chelant |
| | | | |
| Kathlon WT® | 0.1 - 1.0 | biocide | isothiazolone |
| | | | |
| Basacid Blue | 0.6 - 6.0 | dye | triphenylmethane family |
| | | | |
| Copper Nitrate | 0.1 - 1.0 | stabilizer | |
| | | | |
| Dequest® | 0.5 - 5.0 | deposit control agent | hydroxyethylene diphosphonic acid |

| | | | |
|---|---|---|---|
| * All percentages are on the basis of amount of active ingredient. | | | |

The Cobratec TT-100 can be replaced by another azole, such as benzotriazole or mercaptobenzothiazole. The Belcor 5750 can be replaced in part or in total with at least one of: from 1.6 to 16.5%, by weight, of a water soluble molybdate salt, such as sodium molybdate, especially sodium molybdate dehydrate, and sufficient water soluble zinc salt, such as zine sulfate, to give a zinc concentration of from 0.1 to 1.0% by weight, of zinc. Aminocarboxylic acid deposit control agents other than EDTA can also be used. A suitable substitute is nitrilotriacetic acid (NTA). The Kathon WT can be replaced by Kathon WT 1.5% (trademark), which is a weaker solution of isothiazolone. In either case the concentration of the active ingredient (isothiazolone) will be approximately 0.1 to 1.0%, by weight of the composition. Because the Dequest is only 60% active, the actual concentration of hydroxyethylene diphosphonic acid is 0.48 to 4.8%, by weight. The hydroxyetheylene diphosphonic acid can be replaced with aminotri(methylene phosphonic acid) or phosphonobutane-1,2,3-tricarboxylic acid.

The preferred percentage of each particular ingredient used in the composition set out in Table 1 is listed in Table 2, in which the quantity of water has again been omitted.

**TABLE 2**

| Trade Name | Percentage* | Functionality | Chemical Name of Active Ingredient |
|---|---|---|---|
| Cobratec TT-100® | 0.3 | copper corrosion inhibitor | tolyltriazole |
| | | | |
| Belcor 5750® | 1.8 | steel corrosion inhibitor | phosphonocarboxylic acid |
| | | | |
| Acumer 2000® | 2.5 | deposit control agent | sulfonated acrylate copolymer |
| | | | |
| Versene® | 0.5 | deposit control agent | ethylene diamine tetraacetic acid chelant |
| | | | |
| Kathon WT® | 0.3 | biocide | isothiazolone |
| | | | |
| Basacid Blue | 2.0 | dye | triphenylmethane family |
| | | | |
| Copper Nitrate | 0.3 | stabilizer | |
| | | | |
| Dequest® | 1.5 | deposit control agent | hydroxyethylene diphosphonic acid |

| | | | |
|---|---|---|---|
| * All percentages are on the basis of amount of active ingredient. | | | |

During formulation of the water treatment composition described herein, the use of a readily available source of biologically active phosphate was purposely avoided. Inorganic phosphates, although excellent corrosion inhibitors, provide an essential and often lacking nutrient for microbiological growth. Organic phosphates are used to prevent scale and corrosion. Some simple organic phosphates used for this purpose can also be injected and metabolized by microorganisms in their growth cycle. Belcor 5750, unlike many other organic phosphates used for water treatment, is metabolized very slowly by microorganisms.

Kathon WT was selected as the biocide for the formulation because of its high activity at low concentrations, its stability in formulation, and its lack of ionic charge. This biocide is not inherently reactive with the deposit control agents listed in Tables 1 and 2.

While the biocide (Kathon WT) is a very reactive molecule which would normally react with either the deposit control agents or the corrosion inhibitors, it has been found that the stability of the composition is maintained simply by allowing the pH of the composition to be depressed to approximately 1.5 by the inherently acid Belcor 5750 and Dequest.

As mentioned in applicant's copending Canadian application Serial No. 2,048,059, filed July 29, 1991, a mixture of an aminocarboxylic acid, such as EDTA, and a phosphono-carboxylic acid, such as hydroxyethylene diphosphonic acid, displays a synergistic effect when used in scale prevention. Thus, a relatively low concentration of aminocarboxylic acid can be used in the composition.

The described water treatment composition contains copper nitrate for stabilizing the actual biocide molecules (the isothiazolone). It is the nitrate moiety which is the predominant stabilizer, since other metal nitrates will also stabilize isothiozolone, albeit at higher concentrations.

However, copper will react with the other ingredients in solution, and result in their precipitation. It has been found that the chelating agent EDTA prevents such reactions.

As with any water treatment chemicals, the correct dosage of the composition is important for achieving the desired effect. For this reason, a blue dye has been incorporated into the product. The intensity of the blue color in the treated water can be compared to a set of blue color standards to determine if dosing is accurate, or the intensity of the blue color can be determined using a colorimeter.

## Claims

1. A cooling water treatment composition characterised in that, upon addition to cooling water, it provides, in combination, corrosion inhibition, deposition control and biocidal properties, and it comprises the following components:
(a) from 0.1 to 1.0%, by weight, based on the total weight, of an azole copper corrosion inhibitor;
(b) a steel corrosion inhibitor selected from:
(i) from 0.6 to 6.0%, by weight, based on the total weight, of a phosphono-carboxylic acid;
(ii) from 1.6 to 16.5%, by weight, based on the total weight, of a water-soluble molybdate salt;
(iii) sufficient water-soluble zinc salt to give a zinc concentration of from 0.1 to 1.0%, by weight, based on weight; and
(iv) mixtures of the said components b(i), b(ii) and b(iii);
(c) from 0.6 to 6.0%, by weight, based on the total weight, of a sulfonated acrylate copolymer deposit control agent;
(d) from 0.15 to 1.6%, by weight, based on the total weight, of an aminocarboxylic acid deposit control agent;
(e) from 0.1 to 1.0%, by weight, based on the total weight, of isothiazolone biocide;
(f) from 0.5 to 5.0%, by weight, based on the total weight, of an organophosphate deposit control agent selected from hydroxyethelene diphosphonic acid, aminotri-(methylene phosphonic acid), phosphonobutane-1,2,3-tricarboxylic acid and mixtures thereof;
and
(g) the balance water;
the said components providing the said combination of properties where the composition is inherently depressed to a pH of about 1.5 by the said steel corrosion inhibitor and the said organophosphate deposit control agent, the depressed pH inhibiting the chemical reaction of the said corrosion inhibitors and deposit control agents with the said isothiazolone biocide thereby rendering the composition stable.

2. A composition as claimed in claim 1 wherein it also comprises from 0.6 to 6.0%, by weight, triphenylmethane blue dye and from 0.1 to 1.0%, by weight, copper nitrate stabilizer.

3. A composition as claimed in claim 1 or claim 2 wherein the azole copper corrosion inhibitor is selected from tolyltriazole, benzotriazole and mercaptobenzothiazole.

4. A composition as claimed in any of claims 1 to 3 wherein the aminocarboxylic acid is ethylene diamine tetraacetic acid or nitrilotriacetic acid.

## Patentansprüche

1. Zusammensetzung zur Behandlung von Kühlwasser, dadurch gekennzeichnet, daß sie bei Zugabe zum Kühlwasser sowohl Korrisionsschutz-, Ablagerungsregulations- alsauch biozide Eigenschaften verleiht und daß sie die nachfolgenden Bestandteile umfaßt:
(a) 0,1-1,0 Gew.%, bezogen auf das Gesamtgewicht eines Kupferkorrosionsschutzmittels aus einer Azolverbindung;
(b) ein Stahlkorrosionsschutzmittel, ausgewählt aus
(i) 0,6-6,0 Gew.%, bezogen auf das Gesamtgewicht, einer Phosphono-Carbonsäure;
(ii) 1,6-16,5 Gew.%, bezogen auf das Gesamtgewicht, eines wasserlöslichen Molybdatsalzes;
(iii) eine ausreichende Menge eines wasserlöslichen Zinksalzes, um eine Zinkkonzentration von 0,1-1,0 Gew.%, bezogen auf das Gewicht, zu erhalten; und
(iv) Mischungen der Bestandteile b(i), b(ii) und b(iii);
(c) 0,6-6,0 Gew.%, bezogen auf das Gesamtgewicht, eines Abagerungsregulationsmittels aus einem sulfonierten Acrylatcopolymer;
(d) 0,15-1,6 Gew.%, bezogen auf das Gesamtgewicht, eines Ablagerungsregulationsmittels aus einer Aminocarbonsäure;
(e) 0,1-1,0 Gew.%, bezogen auf das Gesamtgewicht, eines bioziden Mittels aus Isothiazolon;
(f) 0,5-5,0 Gew.%, bezogen auf das Gesamtgewicht, eines Ablagerungsregulationsmittels aus einem Organophosphat, ausgewählt aus HydrOxyethylendiphosphonsäure, Aminotri-(methylenphosphonsäure), Phosphonobutan-1,2,3-tricarbonsäure und Mischungen hiervon und
(g) Wasser als Rest;
wobei diese Bestandteile die genannte Kombination der Eigenschaften ergeben, wobei die Zusammensetzung inhärent auf einem pH-Wert von etwa 1,5 durch das Stahlkorrosionsschutzmittel und das Organophosphatablagerungsregulationsmittel gesenkt wird, wobei der abgesenkte pH-Wert die chemische Reaktion der Korrosionsschutzmittel und der Ablagerungsregulationsmittel mit dem bioziden Mittel aus Isothiazolon verhindert, wodurch die Zusammensetzung stabil gehalten wird.

2. Zusammensetzung nach Anspruch 1, die weiterhin 0,6-6,0 Gew.% eines Triphenylmethanblau-Farbstoffes und 0,1-1,0 Gew.% eines Kupfernitrat-Stabilisierungsmittels aufweist.

3. Zusammensetzung nach Anspruch 1 oder Anspruch 2, wobei das Kupferkorrosionsschutzmittel aus Azol ausgewählt wird aus Tolyltriazol, Benzotriazol und Mercaptobenzothiazol.

4. Zusammensetzung nach einem der Ansprüche 1-3, wobei die Aminocarbonsäure Ethylendiamintetraessigsäure oder Nitrilotriessigsäure ist.

## Revendications

1. Composition de traitement d'eau de refroidissement, caractérisée par le fait que, en addition à l'eau de refroidissement, elle procure, en combinaison, une inhibition de la corrosion, un contrôle des dépôts et des propriétés biocides, et par le fait qu'elle comporte les constituants suivants :
(a) de 0,1 à 1,0 %, en poids, par rapport au poids total, d'un inhibiteur de corrosion constitué par un azole de cuivre ;
(b) d'un inhibiteur de corrosion de l'acier choisi parmi :
(i) de 0,6 à 6,0 %, en poids, par rapport au poids total, d'un acide phosphono-carboxylique ;
(ii) de 1,6 à 16,5 %, en poids, par rapport au poids total, d'un sel molybdate hydrosoluble ;
(iii) une quantité suffisante d'un sel de zinc hydrosoluble pour donner une concentration en zinc de 0,1 à 1,0 %, en poids, par rapport au poids total ; et
(iv) des mélanges desdits composants b(i), b(ii) et b(iii) ;
(c) de 0,6 à 6,0 %, en poids, par rapport au poids total, d'un agent pour le contrôle des dépôts constitué par un copolymère d'acrylate sulfoné ;
(d) de 0,15 à 1,6 %, en poids, par rapport au poids total, d'un agent de contrôle de dépôt constitué par un acide aminocarboxylique ;
(e) de 0,1 à 1,0 %, en poids, par rapport au poids total, d'un biocide isothiazolone ;
(f) de 0,5 à 5,0 %, en poids, par rapport au poids total, d'un agent de contrôle de dépôt constitué par un organophosphate et choisi parmi l'acide hydroxyéthylène diphosphonique, l'aminotri-(acide méthylène phosphonique), l'acide phosphonobutane-1,2,3-tricarboxylique et leurs mélanges ;
et
(g) de l'eau pour former le complément ;
lesdits constituants fournissant ladite combinaison de propriétés, la composition étant de façon inhérente abaissée à un pH d'environ 1,5 par ledit inhibiteur de corrosion de l'acier et par ledit agent de contrôle de dépôt organophosphate, le pH abaissé inhibant la réaction chimique desdits inhibiteurs de corrosion et des agents de contrôle de dépôt avec ledit biocide isothiazolone ce qui rend la composition stable.

2. Composition selon la revendication 1, qui comprend également de 0,6 à 6,0 %, on poids, de colorant bleu de triphénylméthane et de 0,1 à 1,0 %, en poids, d'un stabilisant nitrate de cuivre.

3. composition selon la revendication 1 ou la revendication 2, dans laquelle l'inhibiteur de corrosion azole de cuivre est choisi parmi le tolyltriazole, le benzotriazole et le mercaptobenzo-thiazole.

4. Composition selon l'une des revendications 1 à 3, dans laquelle l'acide amino-carboxylique est l'acide éthylène diamine tétraacétique ou l'acide nitrilotriacétique.
